# EUROPEAN PATENT APPLICATION

(11) **EP 1 801 195 A1**
(43) Date of publication of application: **27.06.2007**
(21) Application number: 05112903.9
(22) Date of filing: 23.12.2005
(51) Int. Cl.: C12J 1/00

(54) **Cloudberry vinegar**

(71) Applicant: Mueller, Catherine, 8700 Küsnacht (CH); Mueller, Barbara, 8700 Küsnacht (CH)
(72) Inventor: Mueller, Catherine, 8700 Küsnacht (CH); Mueller, Barbara, 8700 Küsnacht (CH)
(74) Representative: Becker, Konrad

(57) **Abstract**

The invention relates to a new, fermented cloudberry *(rubus chamaemorus)* vinegar and to a method of manufacture of cloudberry vinegar by fermentation of an alcoholic mash produced from cloudberries.

## Description

### Field of the invention

The invention relates to a fermented cloudberry (*rubus chamaemorus*) vinegar and to a method of manufacture thereof from cloudberries.

### Background of the invention

Cloudberries (*rubus chamaemorus*) are yellowish-orange or amber juicy berries of sweet-bitter aroma of the approximate size and texture of raspberries or blackberries. Cloudberries grow in boreal, circumpolar climate in a variety of moist tundra and bog habitats and can be mainly found in Finland, Sweden, Norway, Scotland, Greenland, Siberia, Alaska and Canada. In markets of northern Scandinavia, cloudberries are sold for use in preserves, tarts and other confections. They are also made into a liqueur.

A characteristic of cloudberries is the high content of natural preservatives, such as ascorbic acid, sorbic acid and, in particular, benzoic acid (50 mg per 100 g cloudberry). Natural fermentation of cloudberries is therefore rather difficult. Cloudberry wine may be obtained by fermenting cloudberries with approx. equal amounts of sugar, yeast, tannin and pectic enzyme. Cloudberry vinegar is not commercially available. What is sometimes called cloudberry vinegar in private circles is usually apple or grape vinegar aromatised with cloudberry juice or cloudberry extracts.

### Description of the invention

The invention relates to a new, fermented cloudberry (*rubus chamaemorus*) vinegar and to a method of manufacture of cloudberry vinegar by fermentation of an alcoholic mash produced from cloudberries.

In particular, the invention is directed to a fermented cloudberry vinegar with an acetic acid content in the range of 5 to 15% (w/v), preferably between 5 and 6% (w/v).

The vinegar of the invention retains the typical flavour of cloudberries, and furthermore contains most of the valuable ingredients of cloudberry, such as organoleptic esters, flavanoids and phenolic acids (e.g. ellagic acids) supposed to have beneficial effects as antioxidants and anticarcinogens. Most preferred is a vinegar obtained by fermentation of wild cloudberries, with a natural, golden-yellow colour.

Furthermore the invention is directed to a method of manufacture of cloudberry vinegar wherein a cloudberry mash is fermented in the presence of vinegar inoculation culture, and the obtained cloudberry vinegar optionally filtered.

In particular, the invention relates to a method of manufacture of cloudberry vinegar wherein cloudberries or cloudberry press-cake is mixed with aqueous alcohol, the mixture stirred, decanted and optionally pressed out, the resulting cloudberry mash fermented in the presence of vinegar inoculation culture, and the obtained cloudberry vinegar optionally filtered.

The aqueous alcohol is an aqueous solution containing for example 6-15% ethyl alcohol, e.g. around 10% ethyl alcohol. This solution may be obtained by dilution of commercially available alcohol for consumption to the desired alcohol content. Alternatively, an alcohol mash containing 6-15% ethyl alcohol produced from any source may be used, e.g. from apple, grape, berries, wheat, corn or barley, however, this will influence the organoleptic properties of the final cloudberry vinegar to a considerable extent.

Fermentation of cloudberries is possible in a mash prepared from crushed cloudberries or from a cloudberry press-cake containing an alcohol concentration of around 11%. Such a cloudberry mash is obtained by mixing one part crushed cloudberries or one part cloudberry press-cake with two to six parts, preferably around four parts, of aqueous alcohol. It may be preferable to produce a mash containing a higher ethanol content. This aids in extraction of the organoleptic ingredients of cloudberries into the mash. The obtained mixture is then diluted with cloudberry juice or water to the preferred ethanol content of between 10 and 12% (v/v), in particular between 10.5 and 11.5% (v/v).

The crushed cloudberries or a cloudberry press-cake is mixed with aqueous alcohol. The cloudberries should stay in contact with the alcohol solution for some time to allow extraction of colour and flavour components into the alcoholic mash. Cloudberry juice may be added to the mixture. Anaerobic fermentation of residual sugar may occur either spontaneously or by adding yeast and standard additives used in wine production. The mixture is stirred for a period of 1 to 48 hours, preferably more than 2 hours. The optimum period may be determined by regular testing of the alcohol content of the mash, and stirring is stopped if the alcohol content remains stable. It is then decanted and pressed out, for example filtered through a microfilter. It may be necessary to skim the mixture before filtering.

Optionally, cloudberry juice may be added at this stage.

The cloudberry mash suitable for fermentation cannot be prepared from cloudberry or a cloudberry press-cake as such without additional sugar or alcohol, since the high acid content and the low sugar content of cloudberries limit the possibility of yeast fermentation and the production of a cloudberry wine with reasonable alcohol content. However, it is possible to use a cloudberry mash obtained by anaerobic fermentation of cloudberries in the presence of added sugar and yeast, or a cloudberry wine prepared under such conditions.

The fermentation according to the invention corresponds to standard conditions in vinegar production, i.e. inoculation with suboxidant *acetobacter* or also *gluconobacter,* aeration and proper stirring to increase interaction of the bacteria with the mash in a so-called submersion culture. Suboxidant bacteria are required to avoid further oxidation of acetic acid to carbon dioxide. *Acetobacter* or *gluconobacter* may also be used in the classic Orleans method, wherein the fermentation proceeds slowly on the surface of the liquid in vessels providing a large surface and proper access of air, or with bacteria in immobilized form, e.g. immobilized on beech tree shavings, dried corn shafts or the like, with proper aeration, in the so-called Frings method. Fermentation is conducted as usual at ambient temperatures, for example between 20 and 37°C, preferably at around 30°C, e.g. between 26 and 32°C, depending on the properties of the *acetobacter* or *gluconobacter* culture used.

Fermentation in submersion culture proceeds in a semi-continuous manner in that vinegar is collected in regular intervals and replaced by further cloudberry mash. The intervals are determined based on the speed of fermentation as determined by alcohol and acetic acid content, and are chosen such as to provide optimum fermentation conditions, i.e. an alcohol content of between 5 and 10% (v/v) and an acetic acid content of below 6% (w/v). The obtained vinegar may be further processed, e.g. filtered or treated with bentonite, gelatine or silica. To further improve stability it may be pasteurised. In order to prepare naturally turbid vinegar, cloudberry juice may be added at this stage.

The fermentation may be started with an inoculation culture of *acetobacter* or *gluconobacter* from vinegar production out of pure aqueous alcohol, or also corresponding bacteria from apple or grape vinegar production. On extended fermentation the bacteria are adapted to the particular conditions of the mash used, in the present case of cloudberry mash. Such an *acetobacter* or *gluconobacter* colony adapted to the particular ingredients of cloudberry mash may be isolated from the fermentation mixture and is also an object of the invention. Bacteria are collected e.g. 4 to 6 hours after the last addition of cloudberry mash, and kept at ambient temperature between 15 and 30°C in a closed container excluding air.

Any standard vinegar fermentation apparatus may be used as long as it is adapted to aeration and efficient growth of *acetobacter* or *gluconobacter.*

### Example

Ethanol concentration is determined photometrically in near infrared (NIR) at different wavelengths in parallel, and given as % volume per volume (v/v). Acetic acid is determined by titration to phenolphthalein, and given as % weight per volume (w/v).

In a preliminary experiment 25 g cloudberry press-cake is mixed with 100 ml aqueous alcohol containing 15.29% (v/v) ethanol and 0.82% (w/v) acetic acid. The mixture is stirred for 2 h. The resulting berry mash contains 15.93% (v/v) ethanol and 0.79% (w/v) acetic acid, is intensively yellow and smells intensively fruity.

In a larger experiment 6 kg cloudberry press-cake is mixed with 24 I aqueous alcohol containing 11.42% (v/v) ethanol and 0.64% (w/v) acetic acid. The mixture is kept in a closed vessel for 20 h and stirred occasionally. The mixture is decanted and the remaining residue pressed out. 19.7 I mash containing 11.90% (v/v) ethanol and 0.62% (w/v) acetic acid are obtained. In order to reduce the ethanol concentration to around 11 % this solution is diluted with 1.7 I water. Ethanol concentration is then determined to be 10.95% (v/v), and the acid concentration is 0.56% (w/v). The total concentration of alcohol plus acid is 11.52% which corresponds to the total concentration in standard berry wine (11-12%). The bacteria to be used for vinegar fermentation are adapted to such concentrations. D

A submersion fermenter is run under the following conditions: Maximum capacity 6.0 I; average volume for charge and discharge 2.35 I; fermentation temperature 30.0°C; ventilation 50 l/h with air; concentration of nutrients 1.3 g/l Acetozym Dsplus (Heinrich Frings GmbH and Co. KG, Bonn, Germany).

The fermenter is filled with 5.8 I of an alcoholic vinegar culture (inoculation culture from Frings GmbH, *supra*). After 24 h the fermenter is charged with 50% cloudberry mash and 50% aqueous alcohol, resulting in a 19% cloudberry share in the fermenter. The following charges are 100% cloudberry mash. The fermenter is charged for 7 times in total, with an average running time of 21.0 h. The average final acid concentration is 10.6%, and the average fermentation capacity 49 I pure alcohol per m³ in 24 h.

An inoculation culture adapted to cloudberry is isolated from the fermentation residue and used for further preparations.

Further experiments demonstrate that a mash useful for fermentation may be obtained by mixing 25 g cloudberry press-cake with between 50 ml and 200 ml aqueous ethanol 10-15% (v/v). Further dilution of cloudberry leads to substantially reduced flavour. Higher concentration of cloudberry hampers fermentation due to the natural preservatives contained in cloudberry, and makes it more difficult to separate the liquid phase (mash) from the solids.

## Claims

1. Fermented cloudberry (*rubus chamaemorus*) vinegar.

2. Cloudberry vinegar according to claim 1 with an acetic acid content in the range of 5 to 15% (w/v).

3. Cloudberry vinegar according to claim 1 with an acetic acid content in the range of 5 to 6% (w/v).

4. Inoculation culture of *acetobacter* or *gluconobacter* adapted to vinegar fermentation of cloudberry mash.

5. A method of manufacture of cloudberry vinegar wherein a cloudberry mash is fermented in the presence of vinegar inoculation culture, and the obtained cloudberry vinegar optionally filtered.

6. The method of claim 5 wherein cloudberries or cloudberry press-cake is mixed with aqueous alcohol, the mixture stirred, decanted and optionally pressed out, the resulting cloudberry mash fermented in the presence of vinegar inoculation culture, and the obtained cloudberry vinegar optionally filtered.

7. The method of claim 6 wherein the cloudberry mash is diluted to an ethanol content of between 10 and 12% (v/v) for fermentation.

8. The method of claim 6 wherein the cloudberry mash is diluted to an ethanol content of between 10.5 and 11.5% (v/v) for fermentation.

9. The method of any of claims 5 to 8 wherein cloudberry mash is obtained by mixing one part cloudberry press-cake with between 2 and 6 parts aqueous alcohol.

10. The method of claim 9 wherein the aqueous alcohol contains between 6 and 15% ethyl alcohol.
